# EUROPÄISCHE PATENTANMELDUNG

(11) **EP 3 543 305 A1**
(43) Veröffentlichungstag der Anmeldung: **25.09.2019**
(21) Anmeldenummer: 18163163.1
(22) Anmeldetag: 21.03.2018
(51) Int. Cl.: C09J 5/04

(54) **VERFAHREN ZUM VERBINDEN ZWEIER BAUKÖRPER, KIT MIT POLYMERDISPERSION UND KOAGULATIONSAKTIVATOR**

(71) Anmelder: DAW SE, 64372 Ober-Ramstadt (DE)
(72) Erfinder: HAHN, Anton, 3300 Amstetten (AT); SCHIENDORFER, Helmut, 4713 Gallspach (AT)
(74) Vertreter: Metten, Karl-Heinz

(57) **Zusammenfassung**

Die vorliegende Erfindung betrifft Verfahren zum Verbinden mindestens eines ersten Baukörpers mit mindestens einem zweiten Baukörper, wobei der erste Baukörper eine erste Oberfläche und der zweite Baukörper eine zweite Oberfläche aufweist, wobei der erste und/oder der zweite Baukörper eine Bauplatte ist, wobei der erste Baukörper einen Koagulationsaktivator umfasst, wobei das Verfahren die folgenden Schritte umfasst 1) Bereitstellen mindestens eines ersten Baukörpers umfassend eine mit dem Koagulationsaktivator versehene erste Oberfläche, 2) Beschichten der zweiten Oberfläche des zweiten Baukörpers mit einer Polymerdispersion, 3) Kontaktieren der zweiten Oberfläche mit der ersten Oberfläche unter Koagulation der Polymerdispersion bevor die Polymerdispersion getrocknet ist, wobei der Koagulationsaktivator ausgelegt und eingerichtet ist, die Polymerdispersion bei Kontakt zu koagulieren. Die vorliegende Erfindung betrifft auch ein Kit zur Anwendung des Verfahrens und eine Verwendung des Verfahrens.

## Beschreibung

Die vorliegende Erfindung betrifft ein Verfahren zum Verbinden zweier Baukörper, ein Kit mit einer Polymerdispersion und einem Koagulationsaktivator und die Verwendung der Polymerdispersion und des Koagulationsaktivators zum Fixieren eines Baukörpers.

Dispersionskleber sind aus dem Stand der Technik bekannt, beispielsweise zum Befestigen von Tapeten oder Fliesen. Bei Dispersionsklebern liegen zumeist Polymerpartikel, beispielsweise Casein, thermoplastische oder elastomere Polymerpartikel, dispergiert in einer Flüssigkeit, beispielsweise Wasser, vor. Bei der Verwendung brechen die Dispersionen durch Entweichen des Dispersionsmittels. Dispersionskleber für Baukörper aus dem Stand der Technik haben den erheblichen Nachteil, dass sie zum Abbinden längere Zeit benötigen oder thermische Energie zugeführt werden muss, um das Wasser schnell zu entfernen.

Auch die Befestigung von Bauplatten und Baukörpern mittels Adhäsionskräften ist aus dem Stand der Technik hinreichend bekannt.

Die DE 195 47 845 A1 offenbart ein Verfahren zur Verklebung von Wärmedämmplatten in Fassaden-Wärmedämmverbundsystemen mit mineralisch gebundenen Klebstoffen, wobei der Klebstoff durch die Platten in einen Hohlraum zwischen einem Untergrund und einer Dämmplattenrückseite mittels einer Injektionsdüse eingespritzt wird und die Wärmedämmplatten während des Injektionsvorgangs über eine Abstandshaltevorrichtung in der gewünschten Lage gehalten werden.

Die DE 10 2004 060 390 A1 offenbart ein Verfahren zum Verkleben von mindestens einer Dämmplatte mit einem Untergrund, umfassend die Schritte des Bereitstellens eines Klebemittels, des Aufbringens des Klebemittels auf eine zu verklebende Fläche der Dämmplatte und/oder auf den mit der Dämmplatte zu verklebenden Untergrund, des Inkontaktbringens der zu verklebenden Fläche der Dämmplatte mit dem Untergrund und des Aushärten des zwischen der Dämmplatte und dem Untergrund befindlichen Klebemittels. Der Vorteil des Klebeschaums soll eine verkürzte Trocknung sein.

Die US 5 932 647 A offenbart einen Klebstoff für Holzbauteile mit 70 bis 90% eines Vinylesterpolymers und 10 bis 30% eines hydrolysierten Vinylalkoholpolymers.

DE 10 2004018 850 B4 offenbart ein Wärmedämmverbundsystem, welches wenigstens zwei Dämmplatten, die nebeneinander auf einen tragfähigen Untergrund geklebt sind, und wenigstens ein U- oder Z-Profil aus Gewebe aufweist, das an den Stoßkanten der Dämmplatten eingeklebt ist, wobei als Dämmplatten Vakuumdämmplatten vorgesehen sind und an der von dem Untergrund abgewandten Seite der Vakuumdämmplatten zumindest eine Putzträgerplatte vorgesehen ist, welche ihrerseits mit den Vakuumdämmplatten und dem U- oder Z-Profil verklebt ist. Der Kleber zur Befestigung der Vakuumdämmplatten auf einem beliebigen Untergrund kann beispielsweise aus Kaltbitumen, einer Dispersion, PUR, Ein- oder Zwei-Komponentenkleber oder hydraulisch abbindendem Baukleber bestehen.

Die DE 10 2004 035 249 B3 offenbart ein Verfahren zur Herstellung eines Wärmedämmverbundsystems, bei dem ein Dämmmaterialelement aus Polystyrol, Polyurethan, Mineralwolle und/oder Mineralschaum unter Verwendung eines in Anwesenheit von Feuchtigkeit schäumbaren Materials, wie etwa PU-Schaum, an einem Untergrund befestigt und dann mit einer Armierungsschicht und anschließend mit einer Deckbeschichtung beschichtet wird, wobei der Untergrund vor Auftragen des schäumbaren Materials und/oder das schäumbare Material vor Anbringen des Dämmmaterialelements befeuchtet wird.

Die EP 1 251 210 A2 offenbart ein Befestigungsverfahren für Dämmmaterial an einer Gebäudewand oder an Gebäudewand-Fertigbauteilen, mit einem aushärtbaren Befestigungsmaterial, wobei das Befestigungsmaterial ein reaktives, aufschäumbares Ein- oder Mehrkomponenten-Material ist.

Nachteilig an den Lösungen des Stands der Technik ist, dass es meist relativ lange dauert, bis das Haftmittel eine hinreichende Klebewirkung entfaltet, um das Dämmmaterial zu befestigen. Mithin muss das Dämmmaterial bis zum Aushärten des Haftmittels im Regelfall mechanisch fixiert werden. Auch ist es ein Nachteil, dass zahlreiche Verfahren des Stands der Technik die Beachtung genauer Trockenzeiten und eine exakte Präparierung der Baukörper erfordern. Dies erschwert eine Anwendung durch Laien erheblich, so dass Dämmmaterial oftmals nur durch Fachkräfte sicher befestigt werden kann.

Die Aufgabe der vorliegenden Erfindung ist es, die Nachteile des Stands der Technik zu überwinden, insbesondere ein verbessertes Verfahren zum Verbinden zweier Baukörper bereitzustellen, bei welchem das adhäsive Verbinden deutlich beschleunigt wird. Eine weitere Aufgabe der Erfindung ist es, die sichere Befestigung kostengünstig zu ermöglichen. Auch ist es eine Aufgabe der vorliegenden Erfindung, ein verbessertes Verfahren zur Herstellung von Schallschutzwänden bereitzustellen.

Die Aufgabe wird gelöst durch ein Verfahren zum Verbinden mindestens eines ersten Baukörpers mit mindestens einem zweiten Baukörper, wobei der mindestens eine erste Baukörper eine erste Oberfläche und der mindestens eine zweite Baukörper eine zweite Oberfläche aufweist, insbesondere wobei mehrere erste Baukörper jeweils eine erste Oberfläche aufweisen und/oder mehrere zweite Baukörper jeweils eine zweite Oberfläche aufweisen, wobei der mindestens eine erste und/oder der mindestens eine zweite Baukörper in Form einer Bauplatte, insbesondere der mindestens eine erste Baukörper in Form einer Wärmedämmplatte und/oder Schallschutzdämmplatte, vorliegt, wobei der mindestens eine erste Baukörper einen Koagulationsaktivator, insbesondere in einem festen Aggregatzustand, umfasst, wobei das Verfahren folgende Schritte, insbesondere in dieser Reihenfolge, umfasst:
0) vorzugsweise einseitiges oder beidseitiges Behandeln, insbesondere Besprühen, mindestens eines Baukörpers, insbesondere Zwischenproduktbaukörpers, mit einer, insbesondere wässrigen, Lösung des Koagulationsaktivators und Trocknen des mindestens einen Baukörpers, insbesondere Zwischenproduktbaukörpers, unter Erzeugung des mindestens einen ersten Baukörpers umfassend eine mit dem Koagulationsaktivator versehene erste Oberfläche,
1) Bereitstellen des mindestens einen ersten Baukörpers, insbesondere in Form einer Bauplatte, umfassend die mit dem Koagulationsaktivator versehene erste Oberfläche, insbesondere wobei besagter mindestens eine erste Baukörper mit mindestens einem, insbesondere mechanischen, Fixierungsmittel an einer Wand, vorzugsweise Gebäudewand, befestigt ist oder wobei der mindestens eine erste Baukörper mit mindestens einem dritten Baukörper verbunden ist,
2) Beschichten der zweiten Oberfläche des mindestens einen zweiten Baukörpers mit einer Polymerdispersion, insbesondere unter Verwendung eines Beschichtungshilfsmittels,
3) Kontaktieren der zweiten Oberfläche mit der ersten Oberfläche unter Koagulation der Polymerdispersion bevor die Polymerdispersion getrocknet ist, wobei der Koagulationsaktivator ausgelegt und eingerichtet ist, die Polymerdispersion bei Kontakt zu koagulieren.

Es hat sich überraschenderweise herausgestellt, dass das vorstehend genannte Verfahren ein schnelles Haften ermöglicht. Herkömmliche Verfahren zum Befestigen zeichnen sich oftmals dadurch aus, dass es sehr lange dauert, bis das Haftmittel, insbesondere der Klebstoff, tatsächlich eine hinreichend starke Haftwirkung entfaltet. Dies hat den Nachteil, dass der Baukörper während dieser Zeit regelmäßig vorläufig fixiert werden muss, beispielsweise mit Klemmen oder Pressen, damit er sich nicht selbstständig ablöst. Mit dem vorstehend genannten Verfahren haften Baukörper direkt nach der Kontaktierung. Hierbei bricht der Koagulationsaktivator die Polymerdispersion bei Kontakt.

Der Zeitraum zwischen dem Beschichten des mindestens einen zweiten Baukörpers mit der Polymerdispersion bis zum Zeitpunkt der Kontaktierung des mindestens einen ersten Baukörpers mit dem zweiten Baukörper kann zudem stark variiert werden. Es ist möglich, nach Schritt 2) mehrere Minuten oder sogar länger zu warten, bis die Kontaktierung gemäß Schritt 3) vorgenommen wird, aber auch ein sofortiger Kontaktierung resultiert in der beschriebenen starken und raschen Haftung. Dies macht es sehr einfach, das obige Verfahren umzusetzen, insbesondere kann auch ein Laie Baukörper sicher und zuverlässig verbinden, ohne befürchten zu müssen, dass konkrete Zeiten nicht eingehalten werden. Die Notwendigkeit der Berücksichtigung konkreter Zeiträume ist ein gängiges Problem bei der Verwendung von herkömmlichen Zweikomponenten-Klebstoffen und erschwert die Anwendung derselben erheblich. Die Haftwirkung in Schritt 3) entfaltet sich bei dem vorliegenden erfindungsgemäßen Verfahren nach der Kontaktierung so schnell, dass Baukörper sogar kopfüber entgegen der Schwerkraft durch kurzes aufeinanderpressen aneinander befestigt werden können und diese unmittelbar ohne weitere Hilfsmittel aneinander haften. Ohne Koagulationsaktivator wird die Adhäsionswirkung nicht oder nur sehr langsam erzielt.

Ein "Koagulationsaktivator" im Sinne der vorliegenden Erfindung ist ein Stoff, insbesondere eine chemische Verbindung, der ausgelegt und eingerichtet ist, die Polymerdispersion zu brechen. Als Polymerdispersion ist vorzugsweise eine kolloidal thermodynamisch und/oder kinetisch stabile, insbesondere metastabile, Dispersion von Polymerpartikeln in einer wässrigen Phase anzusehen. Unter "koagulieren" im Sinne der vorliegenden Erfindung wird das Brechen oder Spalten der Dispersion verstanden, insbesondere das Zusammenlagern einzelner Polymerpartikel zu kompakteren Gebilden (Koagulat).

Ein Zwischenproduktbaukörper im Sinne der vorliegenden Erfindung ist eine Vrostufe des ersten Baukörpers, d.h. es sind noch Verfahrensschritte zur Herstellung des ersten Baukörpers notwendig. Die kann vorzugsweise ein Behandeln des Zwischenproduktbaukörpers mit dem Koagulationsaktivator und/oder eine Trocknungsschritt sein.

Eine Polymerdispersion im Sinne der vorliegenden Erfindung ist vorzugsweise als getrocknet anzusehen, wenn nicht mehr als 2 Gew.-%, insbesondere nicht mehr als 10 Gew.-%, insbesondere bevorzugt nicht mehr als 20 Gew.-%, ganz besonderes bevorzugt nicht mehr als 50 Gew.-%, der ursprünglichen Menge an Wasser in der Polymerdispersion enthalten ist. Die ursprüngliche Menge an Wasser in der Polymerdispersion ist vorzugsweise jene Menge an Wasser, die, insbesondere in Schritt 2), während des Beschichtens auf die zweite Oberfläche mit der Polymerdispersion aufgetragen wird. Auch ist es bevorzugt, wenn die Polymerdispersion als getrocknet anzusehen ist, falls der Wasseranteil so weit sinkt, dass ein Brechen der Polymerdispersion auch ohne Beigabe eines Koagulationsaktivators eintritt.

Der erste Baukörper ist vorzugsweise als getrocknet anzusehen, wenn keine Flüssigkeit mehr als Fluid frei vorliegt. Es kann eine Restfeuchtigkeit vorhanden sein, welche aber von dem ersten Baukörper eingesogen ist, insbesondere gebunden vorliegt. Vorzugsweise ist der erste Baukörper insbesondere dann ist als getrocknet anzusehen, wenn mindestens 50 Gew.-%, insbesondere mindestens 70 Gew.-%, vorzugsweise mindestens 90 Gew.-%, insbesondere bevorzugt mindestens 95 Gew.-%, der in Schritt o) zum ersten Baukörper zugegeben, insbesondere wässrigen, Lösung entfernt wurde.

Der Koagulationsaktivator ist vorzugsweise mindestens ein anorganisches oder organisches Salz, insbesondere mit einem mehrwertigen Kation und/oder Anion. Als mehrwertige Anionen haben sich vor allem Sulfate und Phosphate als geeignet erwiesen. Ein besonders geeigneter Koagulationsaktivator in Form eines anorganischen Salzes ist Calciumchlorid oder Aluminiumsulfat. Geeignete organische Salze sind beispielsweise Citrate und/oder Oleate. Auch bevorzugt sind organische Salze mit einem organischen Kation, beispielsweise ein organisches Ammoniumkation, und einem anorganischen Anion.

Alternativ oder zusätzlich kann es sich bei dem Koagulationsaktivator um eine anorganische oder organische Säure handeln, insbesondere eine Brönsted-Säure und/oder eine Lewis-Säure und/oder einen Lewis-Säure-Base-Komplex. Brönsted-Säuren sind Säuren, die Protonen abgeben (Protonendonator). Lewis-Säuren sind Säuren, die Elektronenpaare anlagern (elektrophiler Elektronenpaarakzeptor). Geeignete organische Säuren sind Citronensäure und/oder die Ölsäure bzw. (Z)-9-Octadecensäure.

Als besonders geeignete Koagulationsaktivatoren haben sich auch stickstoffhaltige Verbindungen, Phosphate und/oder Borate erwiesen, insbesondere Phosphate, Borate und/oder stickstoffhaltige Verbindungen, der vorstehend beschriebenen Verbindungsklassen.

Auch ist es in einigen Ausgestaltungen vorgesehen, dass mindestens zwei unterschiedliche Koagulationsaktivatoren im ersten Baukörper umfasst sind, insbesondere zwei unterschiedliche der vorstehend beschriebenen Arten von Koagulationsaktivatoren. Mit zwei unterschiedlichen Koagulationsaktivatoren bricht die Dispersion noch zuverlässiger und schneller.

Vorzugsweise liegt der Koagulationsaktivator in Schritt 1) in einem festen Aggregatzustand, insbesondere wasserfrei und/oder kristallin und/oder als fester Film, vor. Es hat sich gezeigt, dass die Haftwirkung auch bei solchen Koagulationsaktivator sehr schnell eintritt. Dies ist überraschend, da, ohne an eine Theorie gebunden zu sein, vermutet wird, dass die Verbindungen zumindest teilweise erst in der Polymerdispersion gelöst werden müssen, um die Dispersion zu brechen. Ein Lösevorgang benötigt üblicherweise Zeit. Gleichwohl konnte festgestellt werden, dass auch ein Koagulationsaktivator in trockenem Zustand, in festem Aggregatzustand, in wasserfreiem Zustand, im kristallinen Zustand und/oder als fester Film eine rasche Haftung bei Kontaktierung mit dem mindestens einen zweiten Baukörper, der mit der Polymerdispersion beschichtet ist, bewirkt. Ein Vorteil der Verwendung des Koagulationsaktivators in einem festen Aggregatzustand ist, dass der mindestens eine erste Baukörper einfacher zu handhaben ist, insbesondere nicht feucht sein muss. Auch eine langandauernde Lagerung ist nunmehr möglich. Der Installateur kann den trockenen mindestens einen ersten Baukörper in aller Ruhe vorfixieren, beispielsweise an einer Gebäudewand, und anschließend den zweiten Baukörper mit der Polymerdispersion anbringen. In einer zweckmäßigen Ausgestaltung des Verfahrens ist es auch vorgesehen, dass die Bereitstellung des ersten Baukörpers mit dem Koagulationsaktivator in dem festen Aggregatzustand in Schritt 1) auch eine Fixierung, insbesondere mittels Schrauben, Dübeln und/oder Nägeln, des ersten Baukörpers an einer Gebäudewand umfasst.

In einer besonders geeigneten Ausgestaltung ist es vorgesehen, dass der Koagulationsaktivator ein, insbesondere ionisches und/oder stickstoffhaltiges, Flammschutzmittel ist, vorzugsweise ein Flammschutzmittel ausgewählt aus einer Gruppe bestehend aus Phosphaten, Boraten, Borsäuren und Borphosphorsäureestern. Als zweckmäßige Flammschutzmittel zum Brechen der Polymerdispersion haben sich Ammonium-, Melamin-, Guanidin-, Kalium- oder Natriumborate, Borsäuren, oder Borphosphorsäureester sowie Kombinationen derselben erwiesen. Es hat sich gezeigt, dass das Flammschutzmittel als Koagulationsaktivator genutzt werden kann und überraschenderweise die Flammschutzwirkung auch nach dem Brechen der Polymerdispersion erhalten bleibt. Auch geeignet sind Ammoniumsulfat und/oder Ammoniumphosphate, insbesondere Ammoniumdiphosphat, Ammoniumtriphosphat, und/oder Ammoniumpolyphosphate. Mithin bricht die Polymerdispersion, ohne das Flammschutzmittel zu neutralisieren oder in eine nicht mehr wirksame Matrix einzubinden. Damit kann mit nur einem Koagulationsaktivator überraschenderweise sowohl ein geeigneter Flammschutz als auch eine verbesserte Klebewirkung erzielt werden.

In einigen zweckmäßigen Ausgestaltungen ist es vorgesehen, dass der mindestens eine erste Baukörper in Schritt 1) mit dem Koagulationsaktivator durch Behandeln, insbesondere Besprühen, eines Baukörpers, insbesondere Zwischenproduktbaukörpers, mit einer Lösung des Koagulationsaktivators und dem anschließenden Trocknen des ersten Baukörpers erhalten wurde. Vorzugsweise kann ein Schritt 0) vorgesehen sein, insbesondere vor Schritt 1), der wie folgt lautet:
0) einseitiges oder beidseitiges Behandeln, insbesondere Besprühen, der ersten Oberfläche, insbesondere der ersten und einer gegenüberliegenden vierten Oberfläche, mindestens eines Baukörpers, insbesondere Zwischenproduktbaukörpers, mit einer, insbesondere wässrigen, Lösung des Koagulationsaktivators und Trocknen des mindestens einen Baukörpers unter Erzeugung des mindestens einen ersten Baukörpers umfassend die mit dem Koagulationsaktivator versehene erste Oberfläche, insbesondere erste und vierte Oberfläche.

Insbesondere bevorzugt ist es vorgesehen, dass das Behandeln, insbesondere Besprühen, mit einer, insbesondere wässrigen, Lösung des Koagulationsaktivators erfolgt, die 0,1 bis 60 Gew.-%, insbesondere 2 bis 40 Gew.-%, insbesondere bevorzugt 5 bis 20 Gew.-%, ganz besonders bevorzugt 7 bis 15 Gew.-%, des Koagulationsaktivators aufweist. Vorzugsweise ist es vorgesehen, dass mindestens 5 g/m², vorzugsweise mindestens 10 g/m², einer Lösung mit Koagulationsaktivator aufgebracht wird, insbesondere der vorstehend beschriebenen wässrigen Lösung.

Vorzugsweise ist der mindestens eine erste Baukörper eine Bauplatte, insbesondere eine Bauplatte in Form einer Wärmedämmfassadenplatte, einer Schalldämmplatte und/oder einer Leichtbauplatte. Besagte Bauplatten sind für eine Fixierung mittels der Kombination aus Polymerdispersion und Koagulationsaktivator besonders geeignet. Bevorzugt es ist beispielsweise auch, wenn mehrere Wärmedämmfassadenplatten und/oder Schalldämmplatten eingesetzt werden, um eine Wand, insbesondere in Form eines Schachbrettmusters oder von versetzt zueinander angeordneten Rechtecken oder von reiheinweise ohne Versetzung angeordneten Rechtecken, zu bedecken, insbesondere wobei die ersten Baukörper an den Kanten unmittelbar aufeinander treffen und kontaktieren.

Vorzugsweise ist es vorgesehen, dass der mindestens eine erste Baukörper anteilig oder überwiegend aus einem oder mehreren, organischen oder anorganischen, Faserstoffen besteht oder diese umfasst. Als anorganische Faserstoffe haben sich Glaswolle und/oder Steinwolle besonders bewährt. Als organische Faserstoffe sind vor allem Naturfaserstoffe geeignet.

Die Faserstoffe des ersten Baukörpers umfassen oder bestehen in einer Ausgestaltung aus Naturfaserstoffen, vorzugsweise welche ausgewählt sind aus der Gruppe bestehend aus Hanf, Jute, Nessel, Flachs, Kenaf, Ramie, Raps, Sisal, Rohrkolben, Schilf, Miscanthus und Stroh, insbesondere Getreidestroh. Ganz besonders bevorzugt sind Hanf, Flachs, Rohrkolben, Stroh, insbesondere Getreidestroh, und Jute, insbesondere wobei der Baukörper Hanf und/oder Stroh, insbesondere Getreidestroh, umfasst. Besagte Naturfaserstoffe bilden besonders geeignete Fasern aus. Es kann sich dabei um mindestens einen ersten Baukörper handeln, der überwiegend aus Hanf besteht. Vorzugsweise beträgt der Anteil an Pflanzenfasern des ersten Baukörpers in einer Ausgestaltung 5 bis 95 Gew.-%, insbesondere 25 bis 92 Gew.-%, insbesondere bevorzugt 35 bis 90 Gew.-%. Vorzugsweise ist der mindestens eine erste Baukörper mindestens eine Naturfaserdämmplatte. Besagte Materialien und Zusammensetzungen, insbesondere auch die beschriebenen Naturfaserstoffe, haben sich als besondere geeignet erwiesen, um eine optimale Haftwirkung in Kombination mit der beschriebenen Polymerdispersion und dem Koagulationsaktivator zu erzielen.

In einigen zweckmäßigen Ausgestaltungen des Verfahrens weisen die vorstehend genannten Fasern des mindestens einen ersten Baukörpers, insbesondere die Fasern der besagten Naturfaserstoffe, einen Feuchtigkeitsgehalt von 3 bis 30 Gew.-%, insbesondere von 5 bis 20 Gew.-%, insbesondere bevorzugt von 7 bis 18 Gew.-%, auf. Es hat sich gezeigt, dass solche Fasern weniger brüchig sind, so dass aus der Kombination von Polymerdispersion und Koagulationsaktivator resultierende Haftwirkung nochmals verbessert wird. Die Fasern brechen beim Verbinden nicht bzw. es bricht ein kleinerer Anteil als ohne besagten Feuchtigkeitsgehalt.

Das eingangs genannte erfindungsgemäße Beschichtungshilfsmittel kann beispielsweise eine Rolle, ein Pinsel, eine Sprüh- und/oder Spritzapplikation, eine Spachtel oder ein Schwamm sein.

In einer zweckmäßigen Ausgestaltung umfasst der mindestens eine erste Baukörper ein Bindemittel. Als geeignet haben sich Bindemittelfasern, Bindemittelgranulate oder Bindemittelpulver oder beliebige Mischung derselben erwiesen. Als Bindemittelfasern kommen vorzugsweise thermoplastische Mono- oder Multikomponentenfasern zum Einsatz, insbesondere Bikomponentenfasern. Geeignete Bikomponentenfasern können zum Beispiel auf Polyestern oder Polylactiden basieren und/oder Phenolharzfasern umfassen oder darstellen.

Vorzugsweise weist der mindestens eine erste Baukörper eine Dichte von 10 bis 250 kg/m³, insbesondere 70 bis 150 kg/m³, insbesondere bevorzugt 80 bis 140 kg/m³, auf.

In einer zweckmäßigen Ausgestaltung des Verfahrens ist es vorgesehen, dass der mindestens eine erste Baukörper, insbesondere die erste Oberfläche und/oder eine vierte Oberfläche des ersten Baukörper, Oberflächenstrukturen, insbesondere gebundene und/oder freistehende Fasern, vorzugsweise Faserschlaufen und freistehende Fasern, aufweist. Es hat sich gezeigt, dass die Polymerdispersion derartige Oberflächenstrukturen effizient fixiert, wobei die Haftung insgesamt verbessert wird. Hierbei liegt der Koagulationsaktivator oftmals auf einer besonders großen Oberfläche vor und die Polymerdispersion dringt unter einige der gebundenen und/oder freistehenden Fasern und schließt diese ein. Dies verbessert die Haftwirkung überraschenderweise. Bei Verwendung herkömmlicher Haftmittel werden Fasern oftmals als nachteilig angesehen, da diese sich losreißen sowie zerreißen oder brechen können. Mit der vorliegenden Kombination aus Polymerdispersion und Koagulationsaktivator wird dem aber auch angesichts des schnellen Eintritts der Haftwirkung entgegengewirkt, so dass sich die Haftwirkung überraschenderweise verbessert. Freistehende Fasern im Sinne der vorliegenden Erfindung sind vorzugsweise Fasern, die mindestens eine Ende aufweisen, welches vom restlichen Baukörper absteht.

Auch kann es vorgesehen sein, dass der mindestens eine erste Baukörper anteilig oder überwiegend aus einem oder mehreren Stoffen besteht oder diese umfasst, welche ausgewählt sind aus einer Gruppe bestehend aus EPS, XPS, Mineralwolle, Glaswolle, Schaumglas und Kokosfaser, insbesondere bevorzugt EPS (Expandiertes Polystyrol) und/oder XPS (Polystyrol-Extruderschaumstoff). Besagte Materialien haben sich als besonders feuchtigkeitsresistent erwiesen.

Vorzugsweise umfasst die die Polymerdispersion einen Synthesekautschuk, insbesondere Polychloropren. Es hat sich gezeigt, dass Synthesekautschuk, insbesondere Polychloropren, besonders stark haftet und besonders effektiv klebt, wenn es mit einem Koagulationsaktivator kontaktiert.

Die Polymerdispersion ist vorzugsweise eine wässrige Lösung mit Wasser im flüssigen Zustand, insbesondere wobei der Wasseranteil 20 bis 80 Gew.-%, insbesondere bevorzugt 30 bis 70 Gew.-%, ganz besonderes bevorzugt 40 bis 60 Gew.-%, beträgt.

Ferner ist es bevorzugt, wenn die Polymerdispersion mindestens einen Stabilisator umfasst, insbesondere mindestens ein kationisches, anionisches oder nichtionisches Tensid oder ein Schutzkolloid.

Ganz besonders bevorzugt sind anionische und/oder kationische Polymerdispersionen. Anionische Polymerdispersionen sind vorzugsweise basisch und kationische vorzugsweise sauer. Hierbei ist es besonders bevorzugt, wenn der Koagulationsaktivator für anionische Polymerdispersionen eine Säure und/oder ein Salz, insbesondere zumindest eine Säure oder ein kationischen Tensid, vorzugsweise eine Brönsted-Säure und/oder Lewis-Säure, und für katonische Polymerdispersionen eine Base und/oder ein Salz, insbesondere zumindest eine Base oder ein anionisches Tensid, vorzugsweise eine Brönsted-Base und/oder Lewis-Base, ist. Es wurde festgestellt, dass diese die jeweils korrespondierende Polymerdispersionen besonders schnell brechen.

Vorzugsweise umfassen anionische Polymerdispersion ein anionisches Tensid, insbesondere mit mindestens einem organischen Rest und einem anionischen Teil, vorzugsweise einer anionischen funktionellen Gruppe, beispielsweise ein Carboxylat, Sulfonat oder Sulfat. Vorzugsweise umfassen kationische Polymerdispersionen ein kationisches Tensid, insbesondere mit mindestens einem organischen Rest und einem kationischen Teil, vorzugsweise einer quartären Ammonium-Gruppe.

Neben anionische und kationische Polymerdispersionen sind auch Polymerdispersionen erfindungsgemäß denkbar, welche weder anionisch noch kationisch sind. Diese werden vorzugsweise mit Salzen als Koagulationsaktivator gebrochen. Polymerdispersion, die weder anionisch noch kationisch sind, umfassen vorzugsweise nichtionische Tenside, beispielsweise mit Alkohol- oder Ethergruppe oder beides, beispielsweise in Form von Ethoxylatgruppen.

Überraschenderweise sind anionische Polymerdispersionen und/oder Polymerdispersionen mit nichtionischen Tenside besonders geeignet für das vorliegende Verfahren.

In einigen Ausgestaltungen umfasst die Polymerdispersion mindestens ein Netzmittel, mindestens einen Verdicker und/oder mindestens einen Füllstoff.

Als besonderes geeignet haben sich Polymerdispersionen erwiesen, die auf der zweiten Oberfläche, insbesondere auf der zweiten Oberfläche und der nachstehend beschriebenen dritten Oberfläche, eine mittlere Schichtdicke von 10 bis 1000 µm, insbesondere 50 bis 500 µm, vorzugsweise 100 bis 400 µm, aufweisen. Innerhalb dieser Schichtdicken ist der Koagulationsaktivator besonders effizient.

In einer Ausgestaltung kann der zweite Baukörper eine Trockenbauplatte sein. In einer Ausgestaltung hat der zweite Baukörper, insbesondere in Form einer Trockenbauplatte, eine mittlere Materialstärke von 6 bis 25 mm, insbesondere von 8 bis 20 mm, vorzugsweise von 10 bis 15 mm. Vorzugsweise ist es dabei ferner vorgesehen, dass der zweite Baukörper eines oder mehrere Materialien ausgewählt aus einer Gruppe bestehend aus Gips, Gipsfasern, Lehm, Holz und Stroh umfasst und/oder, insbesondere gebundene, Naturfasern umfasst. Ein besonders geeigneter zweiter Baukörper ist eine Gipskartonplatte und/oder Gipsfaserplatte.

Vorzugsweise ist die Materialstärke des mindestens einen zweiten Baukörpers geringer als jene des mindestens einen ersten Baukörpers, insbesondere um ein Vielfaches geringer.

In einer alternativen Ausgestaltung kann der erste oder zweite Baukörper auch eine Wand sein, insbesondere eine Gebäudewand, vorzugsweise eine Holzwand. Die Gebäudewand kann Beton, Ziegel, Porenbeton, insbesondere Ytong-Porenbeton, Kalksandstein und/oder Holz umfassen und/oder aus diesen Materialien bestehen. Als besonders geeignet haben sich erste oder zweite Baukörper umfassend oder bestehend aus Massivholz und/oder Brettschichtholz erwiesen.

Auch kann es vorgesehen sein, dass die in Schritt 1) genannte Wand eine Gebäudewand ist, welche vorzugsweise Beton, Ziegel, Porenbeton, insbesondere Ytong-Porenbeton, Kalksandstein und/oder Holz umfasst und/oder aus diesen Materialien besteht. Als besonders geeignet hat sich eine Wand gemäß Schritt 1) umfassend oder bestehend aus Massivholz und/oder Brettschichtholz erwiesen.

Auch kann es vorgesehen sein, dass der in Schritt 1) genannte dritte Baukörper eine Trockenbauplatte ist. In einer Ausgestaltung hat der dritte Baukörper, insbesondere in Form einer Trockenbauplatte, eine mittlere Materialstärke von 6 bis 25 mm, insbesondere von 8 bis 20 mm, vorzugsweise von 10 bis 15 mm. Vorzugsweise ist es dabei ferner vorgesehen, dass der dritte Baukörper eines oder mehrere Materialien ausgewählt aus einer Gruppe bestehend aus Gips, Gipsfasern, Lehm, Holz und Stroh umfasst und/oder, insbesondere gebundene, Naturfasern umfasst. Ein besonders geeigneter dritter Baukörper ist eine Gipskartonplatte und/oder Gipsfaserplatte. In einer Ausgestaltung ist der dritte Baukörper baugleich zum mindestens einen zweiten Baukörper.

Vorzugsweise ist der erste, zweite und/oder dritte Baukörper verwindungssteif und/oder lässt sich nicht oder nur unwesentlich verbiegen ohne zu zerbrechen. Unwesentlich ist eine Verbiegung insbesondere dann, wenn die aus der Verbiegung resultierende Krümmung einem Krümmungsradius entspricht, der größer als 0,1 m, insbesondere größer als 0,5 m, vorzugsweise größer als 1 m, insbesondere bevorzugt größer als 5 m, ganz besonderes bevorzugt größer als 20 m, ist. Dies vereinfacht die Anbringung mittels der Kombination aus Koagulationsaktivator und Polymerdispersion. Die Polymerdispersion bricht sehr schnell bei Kontakt mit dem Koagulationsaktivator und eine Nachkorrektur ist oftmals nicht ohne weiteres möglich. Mit starren Baukörpern können diese auf Kante angelegt und dann fixiert werden, was die Anbringung bei Verwendung der besagten Kombination aus Koagulationsaktivator und Polymerdispersion erleichtert.

Ein weiterer Gegenstand der vorliegenden Erfindung ist ein Verfahren zur Herstellung einer gedämmten Gebäudewand, wobei mindestens ein erster und mindestens ein zweiter Baukörper wie dies vorstehend beschrieben wurde, verbunden werden, umfassend die folgenden Schritte, insbesondere in dieser Reihenfolge:
a) vorzugsweise einseitiges oder beidseitiges Behandeln, insbesondere Besprühen, mindestens eines Baukörpers, insbesondere Zwischenproduktbaukörpers, mit einer, insbesondere wässrigen, Lösung des Koagulationsaktivators und Trocknen des mindestens einen Baukörpers, insbesondere Zwischenproduktbaukörpers, unter Erzeugung des mindestens einen ersten Baukörpers umfassend die mit dem Koagulationsaktivator versehene erste Oberfläche, insbesondere Behandeln, insbesondere bevorzugt Besprühen, des Baukörpers unter Erzeugung des ersten Baukörpers wie dies vorstehend für Schritt 0) beschrieben wurde,
b) vorzugsweise Anbringung einer Feuchtsperre, insbesondere am Sockel der Wand, vorzugsweise eine Feuchtsperre in Form eines feuchtigkeitsresistenten Materials,
c) Bereitstellen des mindestens einen ersten Baukörpers mit der ersten Oberfläche vorzugsweise unter Fixierung des mindestens einen ersten Baukörpers an der Wand mit einem, insbesondere mechanischen, Fixierungsmittel, oder
   Bereitstellen des mindestens einen ersten Baukörpers mit der ersten Oberfläche vorzugsweise unter Fixierung mindestens eines dritten Baukörpers an der Wand mit einem, insbesondere mechanischen, Fixierungsmittel und unter Fixierung des mindesten einen ersten Baukörpers am mindesten einen dritten Baukörper, insbesondere mit der Polymerdispersion und dem Koagulationsaktivator,
d) Beschichten mindestens eines zweiten Baukörpers mit einer Polymerdispersion, insbesondere unter Verwendung eines Beschichtungshilfsmittels,
e) Kontaktieren der zweiten Oberfläche des mindestens einen zweiten Baukörpers mit der ersten Oberfläche unter Koagulation der Polymerdispersion bevor die Polymerdispersion getrocknet ist, wobei der Koagulationsaktivator ausgelegt und eingerichtet ist, die Polymerdispersion bei Kontakt zu koagulieren,
f) vorzugsweise Anbringen mehrerer zweiter Baukörper gemäß den Verfahrensschritten d) und e) und insbesondere bevorzugt verspachteln der Fugen zwischen den zweiten Baukörpern,
g) vorzugsweise Bestreichen des zweiten Baukörpers bzw. der zweiten Baukörper und/oder der Fugen mit einer Beschichtungsmasse, insbesondere einer Farbe.

Hierbei wird der eingangs genannte Schritt 1) durch den Schritt c) konkretisiert, der Schritt 2) entspricht dem Schritt d) und der Schritt 3) dem Schritt e). Der Schritt 0) entspricht dem Schritt a). Vorteile welche in Verbindung mit den Schritten 0), 1), 2) und 3) genannt sind, sind dementsprechend auch zweckmäßige Ausgestaltungen der Schritte a), c), d) und e). Die Benennung wurde aus Gründen der Übersichtlichkeit geändert. Das vorstehende Verfahren kann auch mit den Schritte 0, b), 1), 2), 3), f), g) beschrieben werden, wobei einige der Schritte konkretisiert wurden.

Das Behandeln, insbesondere Besprühen, gemäß Schritt a) erfolgt vorzugsweise mit einer, insbesondere wässrigen, Lösung des Koagulationsaktivators. Zweckmäßige, insbesondere wässrige, Lösungen sind 2 bis 30 Gew.-%ige Lösungen, insbesondere 5 bis 20 Gew.-%ige Lösungen, vorzugsweise 7 bis 15 Gew.-%ige Lösungen. Vorzugsweise ist es vorgesehen, dass mindestens 5 g/m², vorzugsweise mindestens 10 g/m², der Lösung aufgebracht wird, insbesondere der vorstehend beschriebenen, insbesondere bevorzugt wässrigen, Lösung.

Die Feuchtesperre gemäß Schritt b), insbesondere das Material der Feuchtesperre, ist vorzugsweise geeignet, eine Barriere gegen Wasser zu bilden, das die Barriere entgegen der Schwerkraft zu durchdringen sucht.

Die Feuchtesperre gemäß Schritt b) umfasst vorzugsweise ein, insbesondere synthetisches, Dämmmaterial, welches feuchtigkeitsresistent ist, insbesondere sich nicht mit Feuchtigkeit vollsaugt und/oder unter dem Einfluss von Feuchtigkeit nicht aufquillt und/oder durch Feuchtigkeit nicht strukturell verändert wird. Beispielsweise kann EPS nur in geringem Maße Feuchtigkeit aufnehmen und verändert sich unter dem Einfluss von Feuchtigkeit auch nur nach langer Zeit. Sobald EPS trocknet, kann es weiter verwendet werden. Vorzugsweise besteht die Feuchtesperre in einer Ausgestaltung ganz oder überwiegend aus dem zweiten Dämmmaterial. Die Feuchtesperre verhindert den Eintrag von Feuchtigkeit in das erste Dämmmaterial. Die Feuchtesperre kann zu diesem Zwecke feuchtigkeitsundurchlässig sein. Allerdings hat sich gezeigt, dass auch Feuchtesperren geeignet sind, die nur von Feuchtigkeit nicht durchzogen werden und/oder sich nicht mit dieser vollsaugen. Insbesondere im Sockelbereich dringt Feuchtigkeit zumeist nur ein, wenn diese entgegen der Schwerkraft die Feuchtesperre durchdringt. Wenn die Feuchtesperre sich nicht, beispielsweise unter der Einwirkung von Kapillarkräften, wie oft bei Naturdämmstoffen, vollsaugt, kann die Feuchtigkeit die Feuchtesperre nicht entgegen der Schwerkraft durchdringen und ein effektiver Schutz ist gegeben. In einer weiteren Ausgestaltung umfasst die Feuchtesperre gemäß Schritt b) eine Folie, vorzugsweise Kunststofffolie. Vorzugsweise ist es hierbei vorgesehen, dass die Feuchtesperre einen Kern aus einem Dämmmaterial aufweist, der durch die Folie ummantelt ist. Der Kern aus dem Dämmmaterial der Feuchtesperre kann dabei einstückig mit einem Dämmmaterial des ersten Baukörpers verbunden sein, wobei die Folie besagten Kern umschließt, insbesondere auf mindestens drei Seiten umschließt. Auch kann es vorgesehen sein, dass zwischen der Wand und der Feuchtesperre ein Hohlraum vorgesehen ist, insbesondere wobei der erste Baukörper oder der dritte Baukörper unmittelbar mit der Wand verbunden ist, vorzugsweise unmittelbar an dieser anliegt. Dies verbessert die Dämmung, insbesondere Schalldämmung.

In einer zweckmäßigen Ausgestaltung ist das Fixierungsmittel aus Schritt c) ein Mörtel. Alternativ oder zusätzlich haben sich jedoch Dübel, Schrauben und/oder Nägel als geeignete mechanische Fixierungsmittel erwiesen. Die mögliche Fixierung des ersten Baukörpers am dritten Baukörper in Schritt c) erfolgt vorzugsweise mit der erfindungsgemäßen Kombination aus Polymerdispersion und Koagulationsaktivator, welche bereits zur Verbindung des ersten und zweiten Baukörpers beschrieben wurde, insbesondere wobei der dritte Baukörper, insbesondere bevorzugt auf einer dritten Oberfläche, mit einer Polymerdispersion beschichtet ist und mit einer mit Koagulationsaktivator beschichteten vierten Oberfläche des ersten Baukörpers, insbesondere der vorstehend mehrfach genannten vierten Oberfläche des ersten Baukörpers, kontaktiert, wobei besagte vierte Oberfläche vorzugsweise der ersten Oberfläche des ersten Baukörpers gegenüberliegt.

Bevorzugte Ausgestaltungen der Schritte d) und e) wurden bereits vorstehend in Verbindung mit den Schritten 2) bzw. 3) beschrieben. Es sei auf die dortigen Ausführungen zu der Verbindung zweier Baukörper verwiesen.

Vorzugsweise ist ein Schritt f) vorgesehen, nach welchem mehrere zweite Baukörper angebracht werden und die Fugen dazwischen verspachtelt werden. Auch ist es bevorzugt, wenn mehrere erste Baukörper in Schritt c) bereitgestellt und fixiert werden.

Ein weiterer Gegenstand der vorliegenden Erfindung ist ein Kit, umfassend einen ersten Behälter mit einer ersten Zusammensetzung, welche eine Polymerdispersion umfasst und mindestens einen Baukörper, insbesondere den vorstehend beschriebenen ersten Baukörper, welcher einen Koagulationsaktivator, insbesondere in einem festen Aggregatzustand, umfasst, wobei der Koagulationsaktivator ausgelegt und eingerichtet ist, die Polymerdispersion bei Kontakt zu koagulieren. Vorzugsweise umfasst das Kit den vorstehend beschriebenen mindestens einen ersten Baukörper und die vorstehend beschriebene Polymerdispersion zur Behandlung des mindestens einen zweiten Baukörpers.

Ein weiterer Gegenstand der vorliegenden Erfindung ist die Verwendung einer Polymerdispersion und eines Koagulationsaktivators, insbesondere in einem festen Aggregatzustand, vorzugsweise die Verwendung der vorstehend beschriebenen Polymerdispersion und des vorstehend beschriebenen Koagulationsaktivators und/oder des vorstehend beschriebenen Verfahrens, zur klebenden Fixierung eines Baukörpers, vorzugsweise des vorstehenden beschriebenen mindestens einen ersten und/oder zweiten Baukörpers.

Ein weiterer Gegenstand der vorliegenden Erfindung ist eine Verwendung, insbesondere die vorstehend genannte Verwendung, der Polymerdispersion und eines Koagulationsaktivators zur Herstellung von Gebäudeteilen, insbesondere Gebäudewänden mit Wärmedämmplatten und/oder Schalldämmplatten, vorzugsweise als erste und/oder zweiter Baukörper, insbesondere als erster Baukörper, insbesondere bevorzugt mit eine Abdeckplatte als zweiter Baukörper, beispielsweise einer Gipskartonplatte und/oder Gipsfaserplatte.

Ein weiterer Gegenstand der vorliegenden Erfindung ist ein Gebäudeteil mit einem ersten und zweiten Baukörper, wobei besagte erste und zweite Baukörper gemäß dem vorstehend beschriebenen erfindungsgemäßen Verfahren verbunden wurden. Es hat sich gezeigt, dass derartige verbundene Gebäudeteile, insbesondere deren Baukörper, besonders fest verbaut sind. Hierbei ist das Polymer der Polymerdispersion zumindest anteilig mit dem Koagulationsaktivator vermengt, der besagte Polymerdispersion gebrochen hat. Vorzugsweise ist es vorgesehen, dass der erste Baukörper und der zweite Baukörper dabei so ausgestaltet sind, wie dies vorangehend näher beschrieben wurde, insbesondere wobei der erste Baukörper Naturfasern umfasst. Der Gebäudeteil kann eine Gebäudewand, vorzugsweise als erster und/oder zweiter Baukörper, mit Wärmedämmplatten und/oder Schalldämmplatten, vorzugsweise als zweiter und/oder erster Baukörper, umfassen.

Mit der vorliegenden Erfindung ist es gelungen, das Arbeitsverfahren zur Verbindung zweier Baukörpern erheblich zu verbessern. Das Verfahren ist rascher, kostengünstiger und mit weniger Arbeitsschritten verbunden als vergleichbare Verfahren des Stands der Technik. Es eignet sich insbesondere auch zur Erzeugung von Dämmwänden. Auch ein Verfahren zur Erzeugung besagter Dämmwände wird bereitgestellt. Überraschenderweise haften die mit dem Verfahren aneinander fixierten Baukörper rasch und unmittelbar, so dass die Montage erheblich vereinfacht wird.

Weitere Merkmale und Vorteile der Erfindung ergeben sich aus der nachfolgenden Beschreibung, in der Ausführungsbeispiele der Erfindung anhand von schematischen Zeichnungen beispielhaft erläutert werden, ohne dadurch die Erfindung zu beschränken.

Dabei zeigt:
- Figur 1: die schematische Darstellung eines Verfahrensstadium des Behandelns des ersten Baukörpers mit dem Koagulationsaktivator;
- Figur 2: die schematische Darstellung einiger Verfahrensstadien des Verbindens mindestens eines ersten Baukörpers mit mindestens einem zweiten Baukörper;
- Figur 3: die schematische Darstellung einiger Verfahrensstadien der Herstellung einer ersten Ausführungsform einer gedämmten Gebäudewand; und
- Figur 4: die schematische Darstellung einiger Verfahrensstadien der Herstellung einer zweiten Ausführungsform einer gedämmten Gebäudewand.

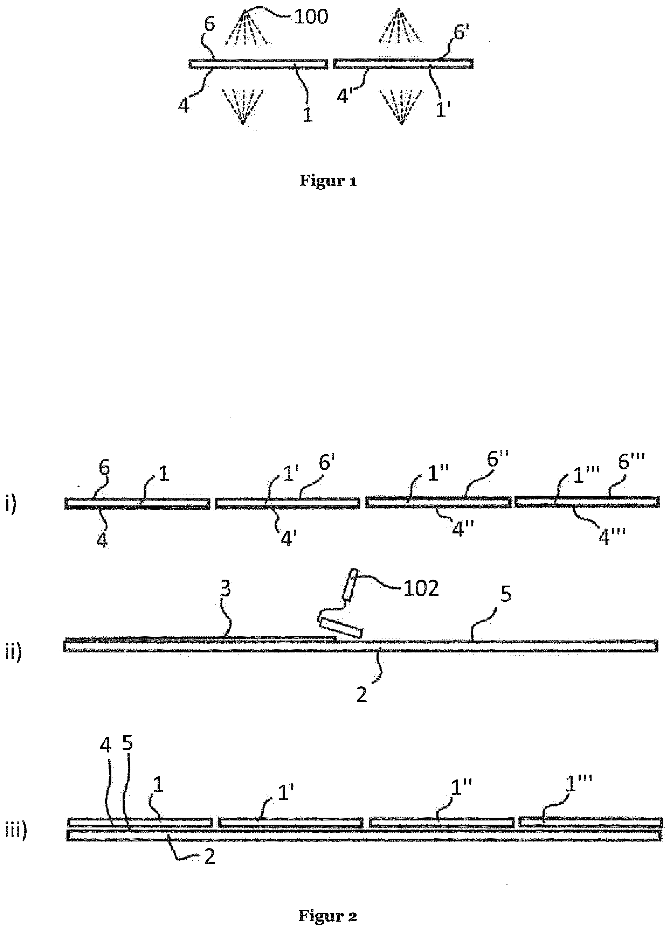

Figur 1 zeigt ein Besprühungshilfsmittel 100, welches eine erste Oberfläche 4 und eine gegenüberliegende vierte Oberfläche 6 eines ersten Baukörpers 1 mit einer wässrigen Lösung des Koagulationsaktivators besprüht. Der Baukörper 1 liegt in Form einer Platte vor, die aus Gründen der Übersichtlichkeit im Querschnitt wiedergegeben ist. Ferner wird eine weitere erste Oberfläche 4' und eine weitere vierte Oberfläche 6' eines weiteren ersten Baukörpers 1' mit der wässrigen Lösung des Koagulationsaktivators besprüht. Es ist grundsätzlich auch möglich - je nach Anwendungsgebiet - nur die ersten Oberflächen 4, 4' mit einer wässrigen Lösung des Koagulationsaktivators zu besprühen und die vierten Oberflächen 6, 6' unbesprüht zu lassen. Nicht gezeigt ist der Trocknungsschritt, welcher sich an das Besprühen anschließen kann. Eine Trocknung kann vorzugsweise an der Luft, in einem Gasstrom und/oder unter Erwärmung erfolgen.

Figur 2 zeigt in Verfahrensstadium i) das Bereitstellen mindestens eines ersten Baukörpers 1 umfassend die mit dem Koagulationsaktivator versehene erste Oberfläche 4. Gegenüberliegend von der ersten Oberfläche 4 befindet sich eine vierte Oberfläche 6. Zu sehen sind drei weitere nebeneinanderliegende erste Baukörper 1', 1", 1"', welche ebenfalls jeweils erste Oberflächen 4', 4", 4'" und vierte Oberflächen 6', 6", 6'" aufweisen.

Figur 2 zeigt in Verfahrensstadium ii) das Beschichten der zweiten Oberfläche 5 des im Querschnitt gezeigten zweiten Baukörpers 2 mit einer Polymerdispersion 3 unter Verwendung eines Beschichtungshilfsmittels 102.

Figur 2 zeigt in Verfahrensstadium iii) das Kontaktieren der zweiten Oberfläche 5 mit der ersten Oberflächen 4 unter Koagulation der Polymerdispersion bevor die Polymerdispersion getrocknet ist, wobei der Koagulationsaktivator ausgelegt und eingerichtet ist, die Polymerdispersion bei Kontakt zu koagulieren. Hierbei wir der zweite Baukörper 2 an die ersten Baukörper 1, 1', 1", 1'" gedrückt, wobei auch die anderen ersten Oberflächen kontaktiert werden. Die Haftung setzt nach wenigen Sekunden ein.

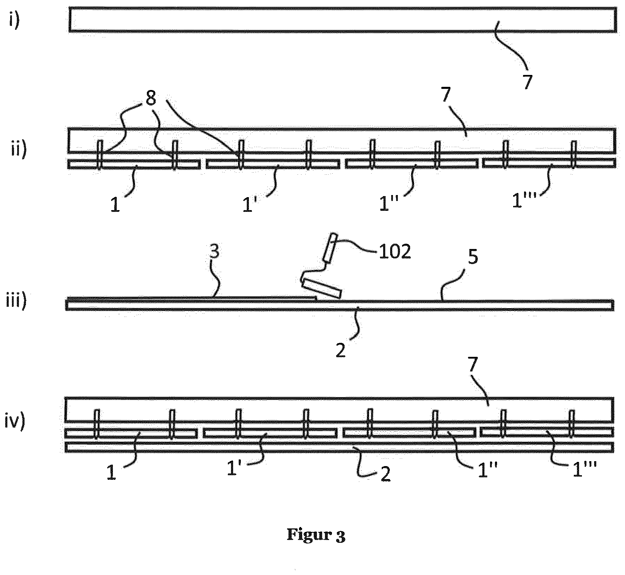

Figur 3 zeigt in Verfahrensstadium i) eine Wand 7, insbesondere eine Gebäudewand. Die Wand ist horizontal wiedergegeben, da es sich in dieser Ausführungsform vorzugsweise um eine Zimmerdecke eines Zimmers handelt. Das in Figur 3 gezeigt Verfahren lässt sich auch analog bei vertikalen Wänden einsetzen.

Figur 3 zeigt in Verfahrensstadium ii) die Fixierung des mindestens einen ersten Baukörpers 1 an der Wand 7 mit einem Fixierungsmittel in Form von Dübeln 8. Auch weitere erste Baukörper 1', 1", 1'" werden mit Dübeln 8 an der Wand 7 befestigt.

Figur 3 zeigt in Verfahrensstadium iii) das Beschichten der zweiten Oberfläche 5 des zweiten Baukörpers 2 mit einer Polymerdispersion 3 unter Verwendung eines Beschichtungshilfsmittels 102.

Figur 3 zeigt in Verfahrensstadium iv) das Kontaktieren der zweiten Oberfläche des mindestens einen zweiten Baukörpers 2 mit die ersten Oberfläche der ersten Baukörper 1, 1', 1", 1'" unter Koagulation der Polymerdispersion bevor die Polymerdispersion getrocknet ist, wobei der Koagulationsaktivator ausgelegt und eingerichtet ist, die Polymerdispersion bei Kontakt zu koagulieren. Hierbei wir der zweite Baukörper 2 an die ersten Baukörper 1, 1', 1", 1'" gedrückt. Die Fixierungsmittel sind in dem ersten Baukörper versenkt und behindern die Kontaktierung nicht.

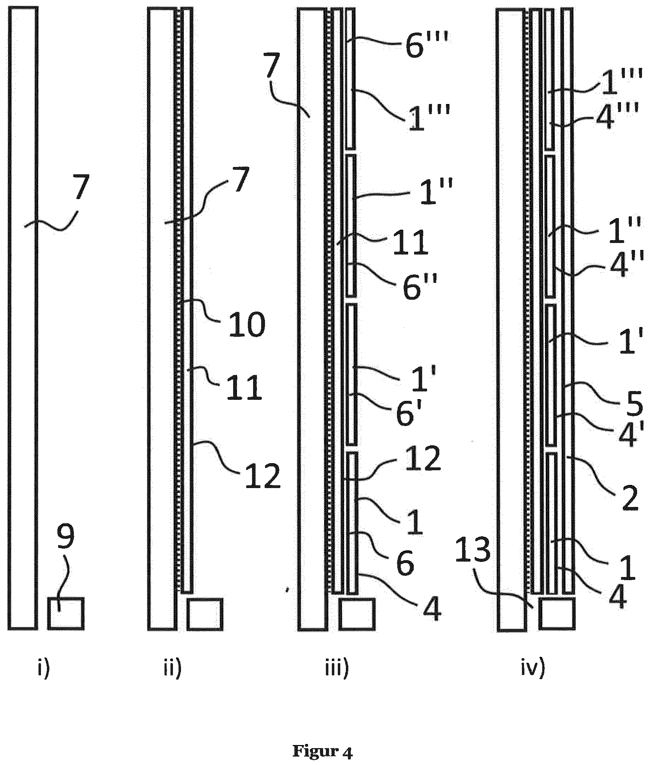

Figur 4 zeigt in Verfahrensstadium i) eine Wand 7, insbesondere Gebäudewand, wobei eine Feuchtsperre 9 am Sockel der Wand beanstandet angeordnet ist. Die Wand ist vertikal wiedergegeben und obgleich andere Orientierungen möglich sind, eignet sich die Feuchtsperre besonders für vertikale Wände.

Figur 4 zeigt in Verfahrensstadium ii) die Fixierung eines dritten Baukörpers 11 an der Wand 7 mit einem Fixierungsmittel in Form von Wandmörtel 10. Die dritte Oberfläche 12 liegt frei und wird nach der Anbringung mit einer Polymerdispersion beschichtet (nicht gezeigt; kann analog zu Figur 3 iii) mit einem Beschichtungshilfsmittel vorgenommen werden).

Figur 4 zeigt in Verfahrensstadium iii) die Wand 7 an welcher der dritte Baukörper 11 befestigt ist, wobei mit der dritten Oberfläche 12 vierte Oberflächen 6, 6', 6", 6'" der ersten Baukörper 1, 1', 1", 1"' kontaktiert werden. Die vierten Oberflächen 6, 6', 6", 6'" weisen einen Koagulationsaktivator auf, welcher die Polymerdispersion auf der dritten Oberfläche 12 bricht. Hierbei haftet die dritte Oberfläche 12 an den vierten Oberflächen 6, 6', 6", 6"'. Die erste Oberfläche 4 liegt frei und weist ebenfalls Koagulationsaktivator auf.

Zwischen den Verfahrensstadium iii) und iv) der Figur 4 erfolgt das Beschichten der zweiten Oberfläche 5 des mindestens einen zweiten Baukörpers 2 mit einer Polymerdispersion 3 unter Verwendung eines Beschichtungshilfsmittels 102, wie dies beispielsweise in auch Verfahrensstadium iii) der Figur 3 zu sehen ist.

Figur 4 zeigt in Verfahrensstadium iv) das Kontaktieren der zweiten Oberfläche 5 des mindestens einen zweiten Baukörpers 2 mit der ersten Oberfläche 4 des ersten Baukörpers 1 unter Koagulation der Polymerdispersion bevor die Polymerdispersion getrocknet ist, wobei der Koagulationsaktivator ausgelegt und eingerichtet ist, die Polymerdispersion bei Kontakt zu koagulieren. Auch eine Kontaktierung der weiteren ersten Oberflächen 4', 4", 4'" der korrespondierenden weiteren ersten Baukörper 1', 1", 1'" erfolgt entsprechend. Hierbei wird der zweite Baukörper 2 an die ersten Baukörper 1, 1', 1", 1"' gedrückt, wobei alle ersten Oberflächen 4, 4', 4", 4'" mit der zweiten Oberfläche 5 kontaktiert werden. Zwischen Feuchtsperre und Wand ist ein Hohlraum 13 ausgebildet.

Die in der voranstehenden Beschreibung, den Ansprüchen sowie den Zeichnungen offenbarten Merkmale der Erfindung können sowohl einzeln als auch in jeder beliebigen Kombination für die Verwirklichung der Erfindung in ihren verschiedenen Ausführungsformen wesentlich sein.

### Bezugszeichen

- 1: ein erster Baukörper
- 1': ein weiterer erster Baukörper
- 1": ein weiterer erster Baukörper
- 1'": ein weiterer erster Baukörper
- 2: ein zweiter Baukörper
- 3: eine Polymerdispersionslage
- 4: eine erste Oberfläche
- 4': eine erste Oberfläche eines weiteren ersten Baukörpers
- 4": eine erste Oberfläche eines weiteren ersten Baukörpers
- 4'": eine erste Oberfläche eines weiteren ersten Baukörpers
- 5: eine zweite Oberfläche
- 6: eine vierte Oberfläche
- 6': eine vierte Oberfläche eines weiteren ersten Baukörpers
- 6": eine vierte Oberfläche eines weiteren ersten Baukörpers
- 6"': eine vierte Oberfläche eines weiteren ersten Baukörpers
- 7: eine Wand, insbesondere Gebäudewand
- 8: Fixierungsmittel in Form von Dübeln
- 9: eine Feuchtsperre
- 10: Fixierungsmittel in Form von Wandmörtel
- 11: ein dritter Baukörper
- 12: eine dritte Oberfläche
- 13: Hohlraum
- 100: ein Besprühungshilfsmittel
- 102: ein Beschichtungshilfsmittel

## Patentansprüche

1. Verfahren zum Verbinden mindestens eines ersten Baukörpers mit mindestens einem zweiten Baukörper,
wobei der mindestens eine erste Baukörper eine erste Oberfläche und der mindestens eine zweite Baukörper eine zweite Oberfläche aufweist,
wobei der mindestens eine erste und/oder der zweite Baukörper eine Bauplatte ist oder umfasst,
wobei der mindestens eine erste Baukörper einen Koagulationsaktivator, insbesondere in einem festen Aggregatzustand, umfasst,
wobei das Verfahren die folgenden Schritte umfasst:
1) Bereitstellen des mindestens einen ersten Baukörpers umfassend eine mit dem Koagulationsaktivator versehene erste Oberfläche, vorzugsweise wobei besagter mindestens eine erste Baukörper mit mindestens einem, insbesondere mechanischen, Fixierungsmittel an einer Wand, insbesondere Gebäudewand, befestigt ist oder wobei der mindestens eine erste Baukörper mit mindestens einem dritten Baukörper verbunden ist,
2) Beschichten der zweiten Oberfläche des mindestens einen zweiten Baukörpers mit einer Polymerdispersion,
3) Kontaktieren der zweiten Oberfläche mit der ersten Oberfläche unter Koagulation der Polymerdispersion bevor die Polymerdispersion getrocknet ist, wobei der Koagulationsaktivator ausgelegt und eingerichtet ist, die Polymerdispersion bei Kontakt zu koagulieren.

2. Verfahren nach Anspruch 1, **dadurch gekennzeichnet dass**
der Koagulationsaktivator mindestens ein anorganisches oder organisches Salz oder eine anorganische oder organische Säure, insbesondere ein stickstoffhaltiges Salz und/oder ein Phosphat oder Borat, ist oder umfasst.

3. Verfahren nach Anspruch 1 oder 2, **dadurch gekennzeichnet dass**
der Koagulationsaktivator ein, insbesondere ionisches und/oder stickstoffhaltiges, Flammschutzmittel ist oder umfasst, vorzugsweise ein Flammschutzmittel ausgewählt aus einer Gruppe bestehend aus Phosphaten, Boraten, Borsäuren und Borphosphorsäureestern, insbesondere bevorzugt Ammoniumphosphate.

4. Verfahren nach einem der vorangehenden Ansprüche, **dadurch gekennzeichnet, dass**
die Polymerdispersion einen Synthesekautschuk, insbesondere Polychloropren, umfasst.

5. Verfahren nach einem der vorangehenden Ansprüche, **dadurch gekennzeichnet, dass**
man den ersten Baukörper mit dem Koagulationsaktivator durch Behandeln, insbesondere durch Besprühen, eines Baukörpers mit einer, insbesondere wässrigen, Lösung des Koagulationsaktivators und dem anschließenden Trocknen des ersten Baukörpers erhält.

6. Verfahren nach Anspruch 5, **dadurch gekennzeichnet, dass**
die, insbesondere wässrige, Lösung des Koagulationsaktivators eine 2 bis 30 Gew.-%ige Lösung, insbesondere eine 5 bis 20 Gew.-%ige Lösung, vorzugsweise eine 7 bis 15 Gew.-%ige Lösung, darstellt und/oder dass
mindestens 5 g/m², vorzugsweise mindestens 10 g/m², der, insbesondere wässrigen, Lösung des Koagulationsaktivators aufgebracht wird.

7. Verfahren nach einem der vorangehenden Ansprüche, **dadurch gekennzeichnet dass** der in Schritt 1) bereitgestellte mindestens eine erste Baukörper im Wesentlichen frei von Wasser im flüssigen Zustand ist und/oder dass der Koagulationsaktivator des ersten Baukörpers kristallin und/oder als fester Film vorliegt.

8. Verfahren nach einem der vorangehenden Ansprüche, **dadurch gekennzeichnet, dass**
die Polymerdispersion Wasser im flüssigen Zustand, insbesondere einen Wasseranteil von 20 bis 80 Gew.-%, vorzugsweise 30 bis 70 Gew.-%, insbesondere bevorzugt 40 bis 60 Gew.-%, aufweist.

9. Verfahren nach einem der vorangehenden Ansprüche, **dadurch gekennzeichnet, dass**
die Polymerdispersion mindestens einen Stabilisator umfasst.

10. Verfahren nach einem der vorangehenden Ansprüche, **dadurch gekennzeichnet, dass**
die Polymerdispersion mindestens ein Netzmittel, mindestens einen Verdicker und/oder mindestens einen Füllstoff umfasst.

11. Verfahren nach einem der vorangehenden Ansprüche, **dadurch gekennzeichnet, dass**
die erste Oberfläche Oberflächenstrukturen, insbesondere gebundene und/oder freistehende Fasern, aufweist.

12. Verfahren nach einem der vorangehenden Ansprüche, **dadurch gekennzeichnet, dass**
der mindestens eine erste Baukörper anteilig oder überwiegend aus einem oder mehreren Naturfaserstoffen besteht oder diese umfasst, welche vorzugsweise ausgewählt sind aus einer Gruppe bestehend aus Hanf, Jute, Nessel, Flachs, Kenaf, Ramie, Raps, Getreidestroh, Kork, Sisal, Rohrkolben, Schilf und Miscanthus, vorzugsweise wobei der Baukörper Hanf umfasst, und/oder
dass der mindestens eine erste Baukörper anteilig oder überwiegend aus einem oder mehreren Stoffen besteht oder diese umfasst, welche ausgewählt sind aus einer Gruppe bestehend aus EPS, XPS, Mineralwolle, Glaswolle, Schaumglas und Kokosfaser.

13. Verfahren nach einem der vorangehenden Ansprüche, **dadurch gekennzeichnet, dass**
der mindestens eine erste Baukörper eine Bauplatte ist oder umfasst, insbesondere eine Bauplatte in Form einer Wärmedämmfassadenplatte, einer Schalldämmplatte oder einer Leichtbauplatte, und/oder
dass der zweite Baukörper eine Bauplatte ist oder umfasst, insbesondere eine Bauplatte in Form einer Trockenbauplatte.

14. Verfahren nach einem der vorangehenden Ansprüche, **dadurch gekennzeichnet, dass**
die Polymerdispersion auf der ersten oder zweiten Oberfläche eine mittlere Schichtdicke von 10 bis 1000 µm, insbesondere 50 bis 500 µm, vorzugsweise 100 bis 400 µm, aufweist.

15. Verfahren zum Verbinden des mindestens einen ersten Baukörpers mit dem mindestens einen zweiten Baukörper nach einem der vorangehenden Ansprüche, wobei das Verfahren auch zur Herstellung einer gedämmten Gebäudewand ausgelegt und eingerichtet ist und wie folgt lautet:
a) vorzugsweise einseitiges oder beidseitiges Behandeln, insbesondere Besprühen nach Anspruch 5 oder 6, mindestens eines Baukörpers mit einer, insbesondere wässrigen, Lösung des Koagulationsaktivators und Trocknen des mindestens einen Baukörpers unter Erzeugung des mindestens einen ersten Baukörpers umfassend die mit dem Koagulationsaktivator versehene erste Oberfläche,
b) vorzugsweise Anbringung einer Feuchtsperre, insbesondere am Sockel der Wand, vorzugsweise einer Feuchtsperre in Form eines feuchtigkeitsresistenten Materials,
c) Bereitstellen des mindestens einen ersten Baukörpers mit der ersten Oberfläche vorzugsweise unter Fixierung des mindestens einen ersten Baukörpers an der Wand mit einem, insbesondere mechanischen, Fixierungsmittel oder vorzugsweise unter Fixierung mindestens eines dritten Baukörpers an der Wand mit einem, insbesondere mechanischen, Fixierungsmittel und unter Verbindung des mindestens einen ersten Baukörpers mit dem mindestens einen dritten Baukörper, insbesondere mittels der Polymerdispersion und dem Koagulationsaktivator,
d) Beschichten mindestens eines zweiten Baukörpers mit einer Polymerdispersion,
e) Kontaktieren der zweiten Oberfläche des mindestens einen zweiten Baukörpers mit der ersten Oberfläche des mindestens einen ersten Baukörpers unter Koagulation der Polymerdispersion, bevor die Polymerdispersion getrocknet ist, wobei der Koagulationsaktivator ausgelegt und eingerichtet ist, die Polymerdispersion bei Kontakt zu koagulieren,
f) vorzugsweise Anbringen mehrerer zweiter Baukörper gemäß den Verfahrensschritten d) und e) und insbesondere bevorzugt verspachteln der Fugen zwischen den zweiten Baukörpern,
g) vorzugsweise Bestreichen der zweiten Baukörper und/oder der Fugen mit einer Beschichtungsmasse, insbesondere einem Putz und/oder einer Farbe.

16. Kit umfassend einen ersten Behälter mit einer ersten Zusammensetzung, welche eine Polymerdispersion umfasst, und einen Baukörper, welcher einen Koagulationsaktivator, insbesondere in einem festen Aggregatzustand, umfasst, wobei der Koagulationsaktivator ausgelegt und eingerichtet ist, die Polymerdispersion bei Kontakt zu koagulieren, insbesondere des ersten Baukörper mit dem Koagulationsaktivator nach einem der vorangehenden Ansprüche und/oder mit der Polymerdispersion nach einem der vorangehenden Ansprüche.

17. Verwendung einer Polymerdispersion und eines Koagulationsaktivators oder eines Baukörpers, insbesondere in einem festen Aggregatzustand, zur klebenden Fixierung eines Baukörpers, insbesondere des ersten Baukörper mit dem Koagulationsaktivator nach einem der vorangehenden Ansprüche und/oder mit der Polymerdispersion nach einem der vorangehenden Ansprüche.
